# EUROPEAN PATENT APPLICATION

(11) **EP 3 476 587 A1**
(43) Date of publication of application: **01.05.2019**
(21) Application number: 17815490.2
(22) Date of filing: 22.06.2017
(51) Int. Cl.: B32B 3/28, B32B 3/30, B32B 5/28, C08J 5/04

(54) **SHEET**

(30) Priority: 24.06.2016 JP 2016125345
(71) Applicant: Sekisui Chemical Co., Ltd., Osaka-shi, Osaka 530-8565 (JP)
(72) Inventor: NAKANO, Yoshinori, Kyoto-shi Kyoto 601-8105 (JP); NAKAMURA, Masanori, Kyoto-shi Kyoto 601-8105 (JP); NAKAJIMA, Setsuo, Tokyo 105-8450 (JP); KADOYAMA, Masakazu, Kyoto-shi Kyoto 601-8105 (JP); NAKATA, Yasushi, Kyoto-shi Kyoto 601-8105 (JP)
(74) Representative: Ter Meer Steinmeister & Partner
(86) International application number: PCT/JP2017/023089
(87) International publication number: WO 2017/222024

(57) **Abstract**

A second resin-impregnated fiber sheet (12) contains fibers extending in a first direction. A third resin-impregnated fiber sheet (13) contains fibers extending in a second direction that is different from the first direction. A first main surface (1a) is provided with a plurality of first linear protruding portions (1a1) extending in the first direction. A second main surface (1b) is provided with a plurality of second linear protruding portions (1b1) extending in the second direction.

## Description

### Technical Field

The present invention relates to a sheet.

### Background Art

Carbon fiber composite materials, especially carbon fiber reinforced plastic (CFRP), are characterized by being light and very strong, and are thus used in members for aircrafts, automobiles, ships, sporting goods, windmill blades, and the like, and in other various industrial applications. Carbon fiber composite materials have a characteristic anisotropic luster due to the orientation of carbon fiber bundles included in the carbon fiber composite materials, and undergo further surface treatment such as coating to have a rich and stately external appearance, and have characteristics such as electrical conductivity, radiolucency, and electromagnetic wave shielding properties. In general, carbon fiber composite materials are used in the form of a laminated plate, a honeycomb sandwich plate, or the like in various industrial applications . However, a thermosetting resin is used as a matrix in most carbon fiber composite materials, and therefore, in order to mold such a type of carbon fiber composite material, a method using a resin curing reaction that requires a relatively long period of time for molding, in other words, a method that is not suitable for mass production, such as autoclave molding, has been used.

On the other hand, a large number of proposals regarding composite materials in which a thermoplastic resin is used as a matrix and molded articles made of such composite materials have been made. For example, in the technique disclosed in Patent Literature 1, a prepreg including reinforced fibers aligned in one direction and a thermoplastic resin, and a structural material using the prepreg are proposed.

Moreover, Patent Literature 2 discloses a resin sheet in which both surfaces are covered with a reinforced fiber resin sheet and a plurality of protruding portions are formed on one main surface, as a sheet that can be used in a windmill blade. In the sheet disclosed in Patent Literature 2, the plurality of protruding portions extend in one direction (referred to as "first direction" hereinafter) at intervals therebetween.

### Citation List

### Patent Literature

Patent Literature 1: Japanese Patent No. 4324649
Patent Literature 2: JP 2016-32929A

### Summary of Invention

### Technical Problem

However, in the sheet as disclosed in Patent Literature 2, the rigidity in another direction (referred to as "second direction" hereinafter) that is different from the first direction is lower than the rigidity in the first direction. Depending on the application, the sheet is sometimes required to have high rigidity in the first direction as well as high rigidity in the second direction.

It is a main object of the present invention to provide a sheet with high rigidity in the first direction and high rigidity in the second direction.

### Solution to Problem

A sheet according to the present invention is a sheet including a first main surface and a second main surface. The sheet according to the present invention includes a first resin-impregnated fiber sheet, a first resin composition layer, a second resin composition layer, a second resin-impregnated fiber sheet, and a third resin-impregnated fiber sheet. The first resin composition layer is joined to a first side of the first resin-impregnated fiber sheet. The second resin composition layer is joined to a second side of the first resin-impregnated fiber sheet. The second resin-impregnated fiber sheet is provided on the first resin composition layer. The second resin-impregnated fiber sheet forms the first main surface. The third resin-impregnated fiber sheet is provided on the second resin composition layer. The third resin-impregnated fiber sheet forms the second main surface. The second resin-impregnated fiber sheet contains fibers extending in a first direction. The third resin-impregnated fiber sheet contains fibers extending in a second direction that is different from the first direction. The first main surface is provided with a plurality of first linear protruding portions extending in the first direction. The second main surface is provided with a plurality of second linear protruding portions extending in the second direction.

It should be noted that, in the present invention, the "resin composition" only includes resin.

In one aspect of the sheet according to the present invention, it is preferable that fibers contained in the second resin-impregnated fiber sheet extend in the first direction, and fibers contained in the third resin-impregnated fiber sheet extend in the second direction.

In one aspect of the sheet according to the present invention, it is preferable that the first direction is orthogonal to the second direction.

In one aspect of the sheet according to the present invention, it is preferable that a fiber density of the fibers that are contained in the second resin-impregnated fiber sheet and extend in the first direction is substantially the same as a fiber density of the fibers that are contained in the third resin-impregnated fiber sheet and extend in the second direction.

In one aspect of the sheet according to the present invention, it is preferable that resin contained in the first, second, and third resin-impregnated fiber sheets includes at least one type of resin selected from the group consisting of polyethylene, polypropylene, a polypropylene copolymer, nylon resin, polymethacrylic resin, polyvinyl chloride resin, and polycarbonate resin, and resin contained in the first and second resin composition layers includes at least one type of resin selected from the group consisting of polyethylene, polypropylene, a polypropylene copolymer, nylon resin, polymethacrylic resin, polycarbonate resin, and polyvinyl chloride resin.

In one aspect of the sheet according to the present invention, it is preferable that the first resin-impregnated fiber sheet contains a plurality of fibers extending in directions that are different from one another.

In one aspect of the sheet according to the present invention, it is preferable that the first resin-impregnated fiber sheet contains a plurality of fibers extending in the first direction and a plurality of fibers extending in the second direction.

In one aspect of the sheet according to the present invention, it is preferable that, in the first resin-impregnated fiber sheet, a fiber density of the fibers extending in the first direction is substantially the same as a fiber density of the fibers extending in the second direction.

In one aspect of the sheet according to the present invention, it is preferable that the first, second, and third resin-impregnated fiber sheets and the first and second resin composition layers are light transmissive.

It should be noted that, in the present invention, "light transmissive" means that the average light transmittance within a visible wavelength range (450 nm to 650 nm) is 30% or more.

In one aspect of the sheet according to the present invention, it is preferable that the first and second resin composition layers contain fibers.

In one aspect of the sheet according to the present invention, it is preferable that the first, second, and third resin-impregnated fiber sheets contain a thermoplastic resin.

In one aspect of the sheet according to the present invention, it is preferable that at least portions of the first and second resin composition layers that are located inside the first and second protruding portions are formed of foam.

The sheet according to the present invention may be used as a water sealing plate.

### Advantageous Effects of the Invention

With the present invention, a sheet with high rigidity in one direction and high rigidity in another direction can be provided.

### Brief Description of Drawings

FIG. 1 is a schematic perspective view of a sheet according to a first embodiment.
FIG. 2 is a schematic cross-sectional view taken along line II-II in FIG. 1.
FIG. 3 is a schematic perspective view of a sheet according to a second embodiment.
FIG. 4 is a schematic cross-sectional view taken along line IV-IV in FIG. 3.

### Description of Embodiments

Hereinafter, favorable embodiments of the present invention will be described. However, the following embodiments are merely examples. The present invention is not limited to the following embodiments.

In the diagrams that are referred to in the embodiments and the like, members having substantially the same function are denoted by the same reference numeral. The diagrams that are referred to in the embodiments and the like are shown schematically. The ratios of the dimensions of the articles shown in the diagrams may be different from the ratios of the dimensions of the actual articles. The ratios of the dimensions of the articles shown in the diagrams may be different from one another. Specific ratios of the dimensions of the articles should be determined in consideration of the following description.

### First embodiment

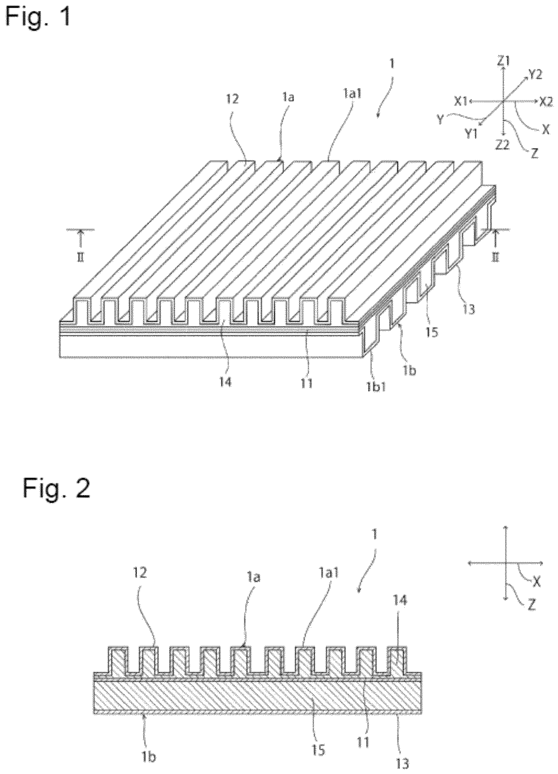

FIG. 1 is a schematic perspective view of a sheet according to a first embodiment. FIG. 2 is a schematic cross-sectional view taken along line II-II in FIG. 1.

A sheet 1 shown in FIGS. 1 and 2 is a sheet that can be used as a water sealing plate or the like, for example.

The sheet 1 includes a first main surface 1a and a second main surface 1b. The first main surface 1a is provided with a plurality of first linear protruding portions 1a1 extending in a y axis direction (first direction) . Each of the plurality of first linear protruding portions 1a1 is provided extending from one end y1 of the first main surface 1a to the other end y2.

The second main surface 1b is provided with a plurality of second linear protruding portions 1b1 extending in an x axis direction (second direction) that is orthogonal to the y axis. Each of the plurality of second linear protruding portions 1b1 is provided extending from one end x1 of the second main surface to the other end x2.

As shown in FIG. 2, the sheet 1 includes a first resin-impregnated fiber sheet 11, a second resin-impregnated fiber sheet 12, a third resin-impregnated fiber sheet 13, a first resin composition layer 14, and a second resin composition layer 15. The sheet 1 is a laminate of the first resin-impregnated fiber sheet 11, the second resin-impregnated fiber sheet 12, the third resin-impregnated fiber sheet 13, the first resin composition layer 14, and the second resin composition layer 15.

The first resin-impregnated fiber sheet 11 is a sheet including a first side and a second side on a side opposite to the first side. The first resin composition layer 14 is joined to the first side of the first resin-impregnated fiber sheet 11. The second resin-impregnated fiber sheet 12 is provided on the first resin composition layer 14. The second resin-impregnated fiber sheet 12 forms the first main surface 1a. In this embodiment, the first resin composition layer 14 fills space between the first resin-impregnated fiber sheet 11 and the second resin-impregnated fiber sheet 12. That is, in this embodiment, substantially no space is present between the first resin-impregnated fiber sheet 11 and the second resin-impregnated fiber sheet 12.

The second resin composition layer 15 is joined to the second side of the first resin-impregnated fiber sheet 11. The third resin-impregnated fiber sheet 13 is provided on the second resin composition layer 15. The third resin-impregnated fiber sheet 13 forms the second main surface 1b. In this embodiment, the second resin composition layer 15 fills space between the first resin-impregnated fiber sheet 11 and the third resin-impregnated fiber sheet 13. That is, in this embodiment, substantially no space is present between the first resin-impregnated fiber sheet 11 and the third resin-impregnated fiber sheet 13. As described above, the sheet 1 according to this embodiment is obtained by layering the third resin-impregnated sheet 13, the second resin composition layer 15, the first resin-impregnated sheet 11, the first resin composition layer 14, and the second resin-impregnated sheet 12 in this order. The individual members will be described below.

### First resin-impregnated fiber sheet 11

The first resin-impregnated fiber sheet 11 is a fiber sheet impregnated with resin. There is no particular limitation on the fiber sheet used as the first resin-impregnated fiber sheet 11 as long as a sheet containing fibers is used.

Although there is no particular limitation on the fibers contained in the fiber sheet used as the first resin-impregnated fiber sheet 11, examples thereof include carbon fibers, glass fibers, polyester fibers, and nylon fibers, and carbon fibers are preferably used from a viewpoint of the rigidity of the sheet.

The fiber sheet used as the first resin-impregnated fiber sheet 11 may be in the form of a woven fabric (woven cloth), a non-woven fabric, a fiber bundle, or the like, for example. In particular, a woven fabric is preferable from the viewpoint of improving the rigidity. Although there is no particular limitation on the woven fabric, a plain woven fabric, a twill woven fabric, a sateen woven fabric, a unidirectional woven fabric, or the like may be used as the woven fabric, for example.

The fibers used in the above-mentioned fiber bundle or woven fabric preferably have an average fiber diameter of 6 µm or more and 27 µm or less. The above-mentioned average fiber diameter can be determined by averaging fiber diameters (maximum diameters) at 10 or more random positions.

There is no particular limitation on the number of fibers used in the above-mentioned fiber bundle or woven fabric. The number of fibers in the fiber bundle is preferably 1000 or more and 50000 or less. When carbon fibers are used as the material of the fiber bundle, the number of fibers in the fiber bundle is preferably 1000 or more and 50000 or less. When glass fibers are used as the material of the fiber bundle, the number of fibers in the fiber bundle is preferably 1000 or more and 20000 or less.

The weight per unit area (1 m square in general) is used as one of the indices for the properties of a fiber sheet, and this property is expressed as a basis weight. The fiber sheet preferably has a basis weight of 100 g/m² or more and 400 g/m² or less. When the basis weight is greater than or equal to the above-mentioned lower limit, the strength of the fiber bundle is further improved. When the basis weight is smaller than or equal to the above-mentioned upper limit, the resin impregnation property is further improved.

Tension is applied to the fibers included in the fiber bundle, and the woven fabric. When tension is applied to the fibers, the distance between the fibers tends to decrease. Therefore, it is preferable to perform processing for increasing the distance between the fibers in the fiber bundle. It is preferable that the above-mentioned fiber bundle contains spacer particles for increasing the distance between the fibers. When the distance between the fibers is increased in this manner, it is easy to perform impregnation with resin even in the case where high tension is applied to the fibers, due to the distance between the fibers being increased in advance. In addition, when tension is applied to the fibers, the distance between the fibers is less likely to decrease.

There is no particular limitation on the material of the above-mentioned spacer particles. It is preferable that the material of the spacer particles does not undergo excessive deformation due to the temperature or pressure during impregnation.

It is preferable to use naphthoxazine resin as the material of the above-mentioned spacer particles. Naphthoxazine resin is easily carbonized and is thus less likely to become excessively soft even when high temperatures or high pressure is applied. Therefore, the distance between the fibers is sufficiently ensured, and the resin impregnation properties are further improved.

The above-mentioned spacer particles are preferably naphthoxazine resin particles or inorganic particles. The spacer particles are preferably inorganic particles, and more preferably inorganic particles other than metal particles. The size of the inorganic particles may be adjusted to be suitable as a spacer by performing processing such as salting-out on a dispersion of the inorganic particles in a colloidal state to form aggregates of the particles.

From the viewpoint of improving the strength of the sheet 1 in the x axis direction and the y axis direction, it is preferable that the first resin-impregnated fiber sheet 11 contains a plurality of fibers extending in directions that are different from one another. In other words, it is more preferable that the first resin-impregnated fiber sheet 11 contains fibers extending in one direction and fibers extending in the other direction that intersects the one direction.

From the viewpoint of further improving the rigidity of the sheet 1 in the y axis direction, it is preferable that the first resin-impregnated fiber sheet 11 contains a plurality of fibers extending in the y axis direction. From the viewpoint of further improving the rigidity of the sheet 1 in the x axis direction, it is preferable that the first resin-impregnated fiber sheet 11 contains a plurality of fibers extending in the x axis direction. From the viewpoint of further improving the rigidity of the sheet 1 in the x axis direction and the y axis direction, it is preferable that the first resin-impregnated fiber sheet 11 contains fibers extending in the x axis direction and fibers extending in the y axis direction.

Although there is no particular limitation on the resin with which the first resin-impregnated fiber sheet 11 is impregnated, the resin may be a cured product of a thermosetting resin or a thermoplastic resin. In particular, it is preferable that the first resin-impregnated fiber sheet 11 is impregnated with a thermoplastic resin. When a configuration is applied in which the first resin-impregnated fiber sheet 11 is impregnated with a thermoplastic resin, shock resistance of the sheet 1 is more likely to improve.

When a cured product of a thermosetting resin is used as the resin with which the first resin-impregnated fiber sheet 11 is impregnated, it is preferable that the first resin-impregnated fiber sheet 11 is impregnated with a resin such as polyurethane resin, vinyl ester resin, or epoxy resin. When a thermoplastic resin is used as the resin with which the first resin-impregnated fiber sheet 11 is impregnated, examples of the resin with which the first resin-impregnated fiber sheet 11 is impregnated include polyethylene resin, polypropylene resin, a polypropylene copolymer, nylon resin, polymethacrylic resin, polyvinyl chloride resin, and polycarbonate resin, and polypropylene resin or a polypropylene copolymer is preferably used. These types of resins may be used alone as the resin with which the first resin-impregnated fiber sheet 11 is impregnated, or a mixture of a plurality of types of resins may be used.

### Second resin-impregnated fiber sheet 12

The second resin-impregnated fiber sheet 12 is a fiber sheet impregnated with resin. There is no particular limitation on the fiber sheet used as the second resin-impregnated fiber sheet 12 as long as a sheet containing fibers extending in the y axis direction, which is the extension direction of the first linear protruding portions 1a1, is used.

Although there is no particular limitation on the fibers contained in the fiber sheet used as the second resin-impregnated fiber sheet 12, examples thereof include carbon fibers, glass fibers, polyester fibers, and nylon fibers, and carbon fibers are preferably used from a viewpoint of the rigidity of the sheet.

The fiber sheet used as the second resin-impregnated fiber sheet 12 may be in the form of a woven fabric (woven cloth), a non-woven fabric, or a fiber bundle, for example. In particular, a woven fabric is preferable from the viewpoint of improving the rigidity. Although there is no particular limitation on the woven fabric, a plain woven fabric, a twill woven fabric, a sateen woven fabric, a unidirectional woven fabric, or the like may be used as the woven fabric, for example.

In addition, the fibers used in a fiber bundle or a woven fabric, the physical properties of the fibers, the physical properties of the fiber sheet, the spacer particles, and the like, for example, are the same as those in the first resin-impregnated fiber sheet 11.

A method for manufacturing the sheet 1 will be specifically described later. When the sheet 1 is manufactured through press molding, for example, it is preferable to use, as the second resin-impregnated fiber sheet 12, a unidirectional woven fabric containing fibers extending in the y axis direction, which is the extension direction of the first linear protruding portions 1a1. In this case, it is preferable to use fibers made of a thermoplastic resin, such as polyethylene fibers or polypropylene fibers, as weft yarns that are used in a unidirectional woven fabric in a small amount. When a unidirectional woven fabric using weft yarns made of such resin is used, the unidirectional woven fabric is likely to deform during heat press molding. Therefore, press molding can be easily performed. When the sheet 1 is manufactured through extrusion molding, for example, the second resin-impregnated fiber sheet 12 may be constituted by a unidirectional woven fabric, or a plain woven fabric, a twill woven fabric, a sateen woven fabric or the like that contains fibers extending in the x axis direction.

From the viewpoint of further improving the rigidity of the sheet 1 in the y axis direction, it is preferable that the second resin-impregnated fiber sheet 12 contains a plurality of fibers extending in the y axis direction, which is the extension direction of the first linear protruding portions 1a1. It is preferable that the fibers contained in the second resin-impregnated fiber sheet 12 extend in the y axis direction, which is the extension direction of the first linear protruding portions 1a1.

Although there is no particular limitation on the resin with which the second resin-impregnated fiber sheet 12 is impregnated, the resin may be a cured product of a thermosetting resin or a thermoplastic resin. In particular, it is preferable that the second resin-impregnated fiber sheet 12 is impregnated with a thermoplastic resin. When a configuration is applied in which the second resin-impregnated fiber sheet 12 is impregnated with a thermoplastic resin, the shock resistance of the sheet 1 can be improved.

When a cured product of a thermosetting resin is used as the resin with which the second resin-impregnated fiber sheet 12 is impregnated, it is preferable that the second resin-impregnated fiber sheet 12 is impregnated with a resin such as polyurethane resin, vinyl ester resin, or epoxy resin. When a thermoplastic resin is used as the resin with which the second resin-impregnated fiber sheet 12 is impregnated, examples of the resin with which the second resin-impregnated fiber sheet 12 is impregnated include polyethylene resin, polypropylene resin, a polypropylene copolymer, nylon resin, polymethacrylic resin, polyvinyl chloride resin, and polycarbonate resin, and polypropylene resin or a polypropylene copolymer is preferably used. These types of resins may be used alone as the resin with which the second resin-impregnated fiber sheet 12 is impregnated, or a mixture of a plurality of types of resins may be used.

### Third resin-impregnated fiber sheet 13

The third resin-impregnated fiber sheet 13 is a fiber sheet impregnated with resin. There is no particular limitation on the fiber sheet used as the third resin-impregnated fiber sheet 13 as long as a sheet containing fibers extending in the x axis direction, which is the extension direction of the second linear protruding portions 1b1, is used.

Although there is no particular limitation on the fibers contained in the fiber sheet used as the third resin-impregnated fiber sheet 13, examples thereof include carbon fibers, glass fibers, polyester fibers, and nylon fibers, and carbon fibers are preferably used from a viewpoint of the rigidity of the sheet.

The fiber sheet used as the third resin-impregnated fiber sheet 13 may be in the form of a woven fabric (woven cloth), a non-woven fabric, or a fiber bundle, for example. In particular, a woven fabric is preferable from the viewpoint of improving the rigidity. Although there is no particular limitation on the woven fabric, a plain woven fabric, a twill woven fabric, a sateen woven fabric, a unidirectional woven fabric, or the like may be used as the woven fabric, for example.

In addition, the fibers used in a fiber bundle or a woven fabric, the physical properties of the fibers, the physical properties of the fiber sheet, the spacer particles, and the like, for example, are the same as those in the first resin-impregnated fiber sheet 11.

A method for manufacturing the sheet 1 will be described in detail later. When the sheet 1 is manufactured through press molding, for example, it is preferable to use, as the third resin-impregnated fiber sheet 13, a unidirectional woven fabric containing fibers extending in the x axis direction, which is the extension direction of the second linear protruding portions 1b1. In this case, it is preferable to use fibers made of a thermoplastic resin, such as polyethylene fibers or polypropylene fibers, for a small amount of weft yarns that are used in a unidirectional woven fabric. When a unidirectional woven fabric using weft yarns made of such a resin is used, the unidirectional woven fabric is likely to deform during heat press molding. Therefore, press molding can be easily performed. When the sheet 1 is manufactured through extrusion molding, for example, the third resin-impregnated fiber sheet 13 may be constituted by a unidirectional woven fabric, or a plain woven fabric, a twill woven fabric, a sateen woven fabric or the like that contains fibers extending in the x axis direction.

From the viewpoint of further improving the rigidity of the sheet 1 in the x axis direction, it is preferable that the third resin-impregnated fiber sheet 13 contains a plurality of fibers extending in the x axis direction, which is the extension direction of the second linear protruding portions 1b1. It is preferable that the fibers contained in the third resin-impregnated fiber sheet 13 extend in the x axis direction, which is the extension direction of the second linear protruding portions 1b1.

Although there is no particular limitation on the resin with which the third resin-impregnated fiber sheet 13 is impregnated, the resin may be a cured product of a thermosetting resin or a thermoplastic resin. In particular, it is preferable that the third resin-impregnated fiber sheet 13 is impregnated with a thermoplastic resin. When a configuration is applied in which the third resin-impregnated fiber sheet 13 is impregnated with a thermoplastic resin, the shock resistance of the sheet 1 can be improved.

When a cured product of a thermosetting resin is used as the resin with which the third resin-impregnated fiber sheet 13 is impregnated, it is preferable that the third resin-impregnated fiber sheet 13 is impregnated with a resin such as polyurethane resin, vinyl ester resin, or epoxy resin. When a thermoplastic resin is used as the resin with which the third resin-impregnated fiber sheet 13 is impregnated, examples of the resin with which the third resin-impregnated fiber sheet 13 is impregnated include polyethylene resin, polypropylene resin, a polypropylene copolymer, nylon resin, polymethacrylic resin, polyvinyl chloride resin, and polycarbonate resin, and polypropylene resin or a polypropylene copolymer is preferably used. These types of resins may be used alone as the resin with which the third resin-impregnated fiber sheet 13 is impregnated, or a mixture of a plurality of types of resins may be used.

### First resin composition layer 14

The first resin composition layer 14 is joined to the z1 side of the first resin-impregnated fiber sheet 11. The first resin composition layer 14 fills space between the first resin-impregnated fiber sheet 11 and the second resin-impregnated fiber sheet 12. The first resin composition layer 14 may be made of only resin or a resin composition containing fibers, a filler, and the like. When the first resin composition layer 14 contains fibers and a filler, the first resin composition layer 14 can be provided with various functions. For example, when the first resin composition layer 14 contains chopped fibers or the like, the strength of the first resin composition layer 14 can be improved, and the strength of the sheet 1 can be thus improved. It should be noted that fibers obtained when pieces of the first, second, and third resin-impregnated fiber sheets 11, 12, and 13 are chopped into fine pieces may be used as the chopped fibers, for example.

Although there is no particular limitation on the resin contained in the first resin composition layer 14, examples thereof include polyethylene resin, polypropylene resin, a polypropylene copolymer, nylon resin, polymethacrylic resin, and polyvinyl chloride resin, and it is preferable to use polypropylene resin or a polypropylene copolymer from the viewpoint of shock resistance. These types of resins may be used alone as the resin contained in the first resin composition layer 14, or a mixture of a plurality of types of resins may be used.

The first resin composition layer 14 may be provided only inside the first linear protruding portions 1a1, or provided inside the first linear protruding portions 1a1 as well as between the first resin-impregnated fiber sheet 11 and the second resin-impregnated fiber sheet 12 at portions between the first linear protruding portions 1a1 adjacent in the x axis direction. In other words, at portions between the first linear protruding portions 1a1 adjacent in the x axis direction, the first resin-impregnated fiber sheet 11 and the second resin-impregnated fiber sheet 12 may be in contact with each other, or the first resin composition layer 14 may be provided between the first resin-impregnated fiber sheet 11 and the second resin-impregnated fiber sheet 12.

### Second resin composition layer 15

The second resin composition layer 15 is joined to the z2 side of the first resin-impregnated fiber sheet 11. The second resin composition layer 15 fills space between the first resin-impregnated fiber sheet 11 and the third resin-impregnated fiber sheet 13. The second resin composition layer 15 may be made of only resin or a resin composition containing fibers, a filler, and the like. When the second resin composition layer 15 contains fibers and a filler, the second resin composition layer 15 can be provided with various functions. For example, when the second resin composition layer 15 contains chopped fibers or the like, the strength of the second resin composition layer 15 can be improved, and the strength of the sheet 1 can be thus improved. It should be noted that fibers obtained when pieces of the first, second, and third resin-impregnated fiber sheets 11, 12, and 13 are chopped into fine pieces may be used as the chopped fibers, for example.

Although there is no particular limitation on the resin contained in the second resin composition layer 15, examples thereof include polyethylene resin, polypropylene resin, a polypropylene copolymer, nylon resin, polymethacrylic resin, and polyvinyl chloride resin, and it is preferable to use polypropylene resin or a polypropylene copolymer from the viewpoint of the shock resistance. These types of resins may be used alone as the resin contained in the second resin composition layer 15, or a mixture of a plurality of types of resins may be used.

The second resin composition layer 15 may be provided only inside the second linear protruding portions 1b1, or provided inside the second linear protruding portions 1b1 as well as between the first resin-impregnated fiber sheet 11 and the third resin-impregnated fiber sheet 13 at portions between the second linear protruding portions 1b1 adjacent in the y axis direction. In other words, at portions between the second linear protruding portions 1b1 adjacent in the y axis direction, the first resin-impregnated fiber sheet 11 and the third resin-impregnated fiber sheet 13 may be in contact with each other, or the second resin composition layer 15 may be provided between the first resin-impregnated fiber sheet 11 and the third resin-impregnated fiber sheet 13.

Incidentally, in a sheet as disclosed in Patent Literature 1, a plurality of linear protruding portions extending in one direction are provided at intervals in another direction that is orthogonal to the one direction. Therefore, with the sheet disclosed in Patent Literature 1, the rigidity in one direction is different from the rigidity in another direction that is different from the one direction. Specifically, the rigidity of the sheet disclosed in Patent Literature 1 in the one direction is high, but the rigidity in another direction is low.

In contrast, in the sheet 1, the first main surface 1a is provided with the plurality of first linear protruding portions 1a1 extending in the first direction, and the second main surface 1b is provided with the plurality of second linear protruding portions 1b1 extending in the second direction. In addition, the second resin-impregnated fiber sheet 12 contains the fibers extending in the first direction, which is the extension direction of the first linear protruding portions 1a1, and the third resin-impregnated fiber sheet 13 contains the fibers extending in the second direction, which is the extension direction of the second linear protruding portions 1b1. In this manner, the sheet 1 includes the linear protruding portions extending in directions that are different from each other, and is provided with the resin-impregnated fiber sheets 12 and 13 containing the fibers extending in the directions in which the linear protruding portions extend. Therefore, the sheet 1 has high rigidity in the x axis direction and high rigidity in the y axis direction.

More specifically, the sheet 1 includes the plurality of first linear protruding portions 1a1 extending in the y axis direction (first direction) and the plurality of second linear protruding portions 1b1 extending in the x axis direction (second direction), the second resin-impregnated fiber sheet 12 forming the surface layer of each first linear protruding portion 1a1 extending in the y axis direction contains the fibers extending in the y axis direction, and the third resin-impregnated fiber sheet 13 forming the surface layer of each second linear protruding portion 1b1 extending in the x axis direction contains the fibers extending in the x axis direction. In other words, the first linear protruding portions 1a1 extending in the y axis direction contain the fibers extending in the y axis direction, and the second linear protruding portions 1b1 extending in the x axis direction contain the fibers extending in the x axis direction. Therefore, the sheet 1 has higher rigidity in the x axis direction and the y axis direction.

It should be noted that, in the sheet 1, the widths of the first linear protruding portions 1a1 may be the same as or different from the widths of the second linear protruding portions 1b1. The distances between the first linear protruding portions 1a1 adjacent in the x axis direction may be the same as or different from the distances between the second linear protruding portions 1b1 adjacent in the y axis direction. The heights of the first linear protruding portions 1a1 may be the same as or different from the heights of the second linear protruding portions 1b1. From the viewpoint of reducing the difference between the rigidity of the sheet 1 in the x axis direction and the rigidity of the sheet 1 in the y axis direction, it is preferable that the widths of the first linear protruding portions 1a1 are substantially the same as the widths of the second linear protruding portions 1b1, the distances between the first linear protruding portions 1a1 adjacent in the x axis direction are substantially the same as the distances between the second linear protruding portions 1b1 adjacent in the y axis direction, and the heights of the first linear protruding portions 1a1 are substantially the same as the heights of the second linear protruding portions 1b1.

From the same viewpoint, it is preferable that, in the first resin-impregnated fiber sheet 11, the fiber density of the fibers extending in the x axis direction is substantially the same as the fiber density of the fibers extending in the y axis direction. It is preferable that the fiber density of the fibers that are contained in the second resin-impregnated fiber sheet 12 and extend in the y axis direction is substantially the same as the fiber density of the fibers that are contained in the third resin-impregnated fiber sheet 13 and extend in the x axis direction.

The above-described first resin-impregnated fiber sheet 11, second resin-impregnated fiber sheet 12, second resin-impregnated fiber sheet 13, first resin composition layer 14, and second resin composition layer 15 may be light transmissive. In this case, a light transmissive sheet 1 can be obtained. The light transmissive sheet 1 is favorably used at positions at which lighting is required and the like, for example.

### Method for manufacturing sheet 1

There is no particular limitation on the method for manufacturing the sheet 1. Various methods can be used to manufacture the sheet 1.

For example, the sheet 1 can be manufactured by layering the second resin-impregnated fiber sheet 12, the resin sheet for forming the first resin composition layer 14, the first resin-impregnated fiber sheet 11, the resin sheet for forming the second resin composition layer 15, and the third resin-impregnated fiber sheet 13, and heat pressing them in this state.

For example, the sheet 1 can be manufactured by bonding a sheet obtained by layering the second resin-impregnated fiber sheet 12, the resin sheet for forming the first resin composition layer 14, and the first resin-impregnated fiber sheet 11 and heat pressing them in this state, and a sheet obtained by layering the resin sheet for forming the second resin composition layer 15 and the third resin-impregnated fiber sheet 13 and heat pressing them in this state.

For example, the sheet 1 can be manufactured by bonding a sheet obtained by layering the second resin-impregnated fiber sheet 12, the resin sheet for forming the first resin composition layer 14, and the first resin-impregnated fiber sheet 11 and heat pressing them in this state, and a sheet obtained by layering the first resin-impregnated fiber sheet 11, the resin sheet for forming the second resin composition layer 15 and the third resin-impregnated fiber sheet 13 and heat pressing them in this state. In this case, the sheet 1 can be obtained in which a plurality of first resin-impregnated fiber sheet 11 are present between the first resin composition layer 14 and the second resin composition layer 15.

It should be noted that the laminate needs to be heated to a temperature at which the resin sheets melt during heat pressing. For example, it is preferable to heat the laminate to about 250°C during molding.

### Applications

The above-mentioned sheet 1 can be attached to an attachment target and used in various applications. The sheet 1 can be used in a windmill blade, an aircraft, a ship, a vehicle, a floorboard for an architectural structure, a roof material, a pipe, and the like. The sheet 1 can be favorably used in a windmill blade and a reinforcement for a ship. The sheet can also be used as a water sealing plate or a reinforcing member for a natural gas pipeline.

### 1. Windmill blade

It is preferable that the above-mentioned sheet 1 is used in a windmill blade from the viewpoint of shock resistance and rigidity. A preferable embodiment of a windmill blade includes a windmill blade main body and a fiber resin portion formed of the sheet 1. Specifically, in the above-mentioned windmill blade according to the present invention, the above-mentioned fiber resin portion is attached to the surface of the above-mentioned windmill blade main body. From the viewpoint of effectively suppressing separation of the fiber resin portion, it is preferable to attach the sheet 1 to the surface of the windmill blade main body via an adhesive or resin in order to bond the sheet 1 to the windmill blade main body in the above-mentioned windmill blade.

### 2. Member for ship

A hat structure is used as a structure for reinforcing the body (hull) of a ship. The hat structure is a configuration in which an outer plate forming the body of a ship is integrally provided with a plurality of projections having a rectangular cross section. Using this sheet for reinforcing a portion where the outer plate and the projections are connected in such a ship or using this sheet in a bottom portion of such a ship makes it possible to maintain stable strength for a long period of time and is thus preferable.

Hereinafter, another example of a favorable embodiment of the present invention will be described. In the following description, members having substantially the same functions as those of the members in the above-mentioned first embodiment are denoted by the same reference numerals, and description thereof is omitted.

### Second embodiment

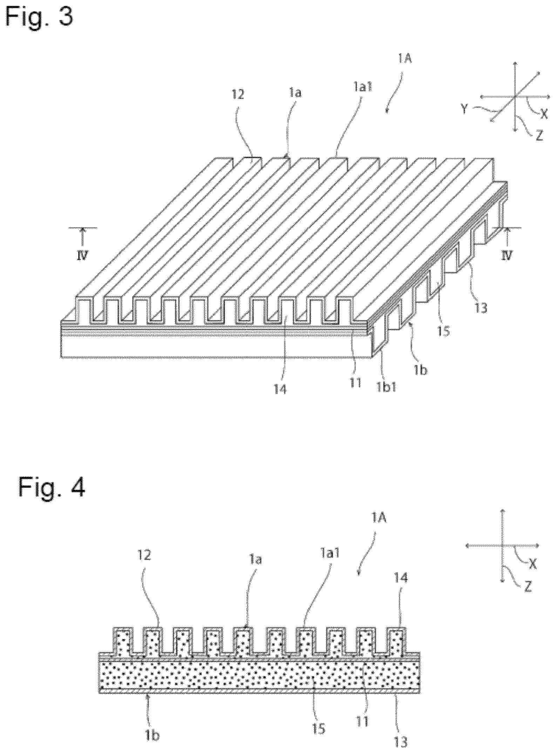

Next, a second embodiment of the sheet according to the present invention will be described with reference to FIGS. 3 and 4. FIG. 3 is a schematic perspective view of a sheet according to the second embodiment. FIG. 4 is a schematic cross-sectional view taken along line IV-IV in FIG. 3. It should be noted that the differences between the second embodiment and the first embodiment will mainly be described hereinafter. Therefore, the description of the same configurations as those of the first embodiment will be omitted unless otherwise stated.

As shown in FIGS. 3 and 4, in a sheet 1A according to this embodiment, at least portions of the first and second resin composition layers 14 and 15 that are located inside the first and second protruding portions 1a1 and 1b1 are formed of foam. Therefore, the sheet 1A has a low density.

Specifically, in the sheet 1A, the entirety of the first and second resin composition layers 14 and 15 is formed of foam. Therefore, the sheet 1A has a lower density and is light.

When at least portions of the first and second resin composition layers 14 and 15 are formed of foam, it is preferable that the first and second resin composition layers 14 and 15 include a resin such as polyethylene resin, polypropylene resin, polystyrene resin, polyurethane resin, or polyacrylic resin. The first and second resin composition layers 14 and 15 may include only one of these types of resins or a plurality of types of resins.

From the viewpoint of reducing the difference between the rigidity in the x axis direction and the rigidity in the y axis direction, it is preferable that the porosity of the first resin composition layer 14 is substantially the same as the porosity of the second resin composition layer 15.

It should be noted that, in the above-mentioned embodiments, the first direction and the second direction according to the present invention are set to be the y axis direction and the x axis direction, respectively, but there is no limitation thereto. That is, the first direction and the second direction in which the linear protruding portions and the fibers extend may be any directions, and it is sufficient that the first direction and the second direction do not extend in the same direction, but intersect each other. That is, the first direction does not necessarily intersect the second direction at a right angle.

### List of Reference Numerals

1,1A: Sheet
1a: First main surface
1a1: First linear protruding portion
1b: Second main surface
1b1: Second linear protruding portion
11: First resin-impregnated fiber sheet
12: Second resin-impregnated fiber sheet
13: Third resin-impregnated fiber sheet
14: First resin composition layer
15: Second resin composition layer

## Claims

1. A sheet including a first main surface and a second main surface, comprising:
a first resin-impregnated fiber sheet including a first side and a second side;
a first resin composition layer joined to the first side of the first resin-impregnated fiber sheet;
a second resin composition layer joined to the second side of the first resin-impregnated fiber sheet;
a second resin-impregnated fiber sheet that is provided on the first resin composition layer and forms the first main surface; and
a third resin-impregnated fiber sheet that is provided on the second resin composition layer and forms the second main surface,
wherein the second resin-impregnated fiber sheet contains fibers extending in a first direction,
the third resin-impregnated fiber sheet contains fibers extending in a second direction that is different from the first direction,
the first main surface is provided with a plurality of first linear protruding portions extending in the first direction, and
the second main surface is provided with a plurality of second linear protruding portions extending in the second direction.

2. The sheet according to claim 1,
wherein the fibers contained in the second resin-impregnated fiber sheet extend in the first direction, and
the fibers contained in the third resin-impregnated fiber sheet extend in the second direction.

3. The sheet according to claim 1 or 2, wherein the first direction is orthogonal to the second direction.

4. The sheet according to claim 2 or 3,
wherein a fiber density of the fibers that are contained in the second resin-impregnated fiber sheet and extend in the first direction is substantially the same as a fiber density of the fibers that are contained in the third resin-impregnated fiber sheet and extend in the second direction.

5. The sheet according to any one of claims 1 to 4,
wherein resin contained in the first, second, and third resin-impregnated fiber sheets includes at least one type of resin selected from the group consisting of polyethylene, polypropylene, a polypropylene copolymer, nylon resin, polymethacrylic resin, polyvinyl chloride resin, and polycarbonate resin, and
resin contained in the first and second resin composition layers includes at least one type of resin selected from the group consisting of polyethylene, polypropylene, a polypropylene copolymer, nylon resin, polymethacrylic resin, polycarbonate resin, and polyvinyl chloride resin.

6. The sheet according to any one of claims 1 to 5, wherein the first resin-impregnated fiber sheet contains a plurality of fibers extending in directions that are different from one another.

7. The sheet according to claim 6, wherein the first resin-impregnated fiber sheet contains a plurality of fibers extending in the first direction and a plurality of fibers extending in the second direction.

8. The sheet according to claim 7,
wherein, in the first resin-impregnated fiber sheet,
a fiber density of the fibers extending in the first direction is substantially the same as a fiber density of the fibers extending in the second direction.

9. The sheet according to any one of claims 1 to 8, wherein the first, second, and third resin-impregnated fiber sheets and the first and second resin composition layers are light transmissive.

10. The sheet according to any one of claims 1 to 9, wherein the first and second resin composition layers contain fibers.

11. The sheet according to any one of claims 1 to 10, wherein the first, second, and third resin-impregnated fiber sheets contain a thermoplastic resin.

12. The sheet according to any one of claims 1 to 11, wherein at least portions of the first and second resin composition layers that are located inside the first and second protruding portions are formed of foam.

13. The sheet according to any one of claims 1 to 12, which is to be used as a water sealing plate.
